(19)

Europäisches
Patentamt
European
Patent Office
Office européen
des brevets

(11) **EP 3 654 429 A1**

(12) **EUROPEAN PATENT APPLICATION**
published in accordance with Art. 153(4) EPC

(43) Date of publication:
**20.05.2020  Bulletin 2020/21**

(21) Application number: **18832361.2**

(22) Date of filing: **22.06.2018**

(51) Int Cl.:
*H01M 8/0232* (2016.01)    *C22C 1/08* (2006.01)
*C22C 13/00* (2006.01)    *C22C 19/03* (2006.01)
*C22C 19/05* (2006.01)    *C25D 7/00* (2006.01)
*H01M 4/86* (2006.01)    *H01M 4/88* (2006.01)
*H01M 8/12* (2016.01)

(86) International application number:
**PCT/JP2018/023724**

(87) International publication number:
**WO 2019/012947 (17.01.2019 Gazette 2019/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **14.07.2017  JP 2017138136**

(71) Applicant: **Sumitomo Electric Industries, Ltd.
Osaka-shi, Osaka 541-0041 (JP)**

(72) Inventors:
• **NUMATA, Koma
Osaka-shi
Osaka 541-0041 (JP)**

• **MAJIMA, Masatoshi
Osaka-shi
Osaka 541-0041 (JP)**
• **AWAZU, Tomoyuki
Osaka-shi
Osaka 541-0041 (JP)**
• **OKUNO, Kazuki
Osaka-shi
Osaka 541-0041 (JP)**
• **HIRAIWA, Chihiro
Osaka-shi
Osaka 541-0041 (JP)**

(74) Representative: **Boult Wade Tennant LLP
Salisbury Square House
8 Salisbury Square
London EC4Y 8AP (GB)**

(54) **METAL POROUS BODY, SOLID OXIDE FUEL CELL AND METHOD FOR MANUFACTURING SAID METAL POROUS BODY**

(57)    A metal porous body in accordance with an embodiment of the present invention is a metal porous body having a flat plate shape and having continuous pores, a framework of the metal porous body having an alloy layer containing nickel and chromium, a silver layer being formed on a surface of the alloy layer.

FIG.2

EP 3 654 429 A1

**Description**

TECHNICAL FIELD

The present invention relates to a metal porous body, a solid oxide fuel cell, and a method for producing a metal porous body.

The present application claims priority to Japanese Patent Application No. 2017-138136 filed on July 14, 2017, the entire contents of which are incorporated herein by reference.

BACKGROUND ART

Conventionally, methods for forming a metal layer on a surface of a resin molded body such as foamed resin have been known as methods for producing a metal porous body having a high porosity and a large surface area. For example, Japanese Patent Laying-Open No. 11-154517 (PTL 1) describes a method for producing a metal porous body by performing conductive treatment on a surface of a framework of a resin molded body, forming an electroplating layer made of a metal thereon, and burning and removing the resin molded body as necessary.

Further, Japanese Patent Laying-Open No. 2012-132083 (PTL 2) proposes a metal porous body made of a nickel-tin alloy, as a metal porous body which has oxidation resistance and corrosion resistance, has a high porosity, and is suitable for current collectors of various cells, capacitors, fuel cells, and the like. Furthermore, Japanese Patent Laying-Open No. 2012-149282 (PTL 3) proposes a metal porous body made of a nickel-chromium alloy, as a metal porous body having a high corrosion resistance.

CITATION LIST

PATENT LITERATURE

PTL 1: Japanese Patent Laying-Open No. 11-154517
PTL 2: Japanese Patent Laying-Open No. 2012-132083
PTL 3: Japanese Patent Laying-Open No. 2012-149282

SUMMARY OF INVENTION

A metal porous body in accordance with one aspect of the present invention is a metal porous body having a flat plate shape and having continuous pores, a framework of the metal porous body having an alloy layer containing nickel and chromium, a silver layer being formed on a surface of the alloy layer.

A method for producing a metal porous body in accordance with one aspect of the present invention is a method for producing the metal porous body in accordance with one aspect of the present invention described above, including: preparing a porous body base material having a flat plate shape and having continuous pores; and plating silver on a surface of a framework of the porous body base material, the framework of the porous body base material having an alloy layer containing nickel and chromium.

BRIEF DESCRIPTION OF DRAWINGS

Fig. 1 is an enlarged photograph showing a structure of a framework of an example of a metal porous body having a framework of a three-dimensional network structure.
Fig. 2 is an enlarged view schematically illustrating a partial cross section of an example of a metal porous body in accordance with an embodiment of the present invention.
Fig. 3 is a schematic view illustrating an example where areas A to E are defined on the metal porous body viewed planarly in a method for measuring an average film thickness of a silver layer in the metal porous body.
Fig. 4 is a view schematically showing an image obtained when a cross section (cross section taken along a line A-A in Fig. 2) of a framework in area A of the metal porous body shown in Fig. 3 is observed with a scanning electron microscope.
Fig. 5 is a schematic view illustrating an example of a field of view (i) obtained when a silver layer 11 shown in Fig. 4 is magnified and observed with the scanning electron microscope.

Fig. 6 is a schematic view illustrating an example of a field of view (ii) obtained when silver layer 11 shown in Fig. 4 is magnified and observed with the scanning electron microscope.

Fig. 7 is a schematic view illustrating an example of a field of view (iii) obtained when silver layer 11 shown in Fig. 4 is magnified and observed with the scanning electron microscope.

Fig. 8 is a view schematically illustrating a partial cross section of an example of a porous body base material having a three-dimensional network structure.

Fig. 9 is a photograph of foamed urethane resin as an example of a resin molded body having a framework of a three-dimensional network structure.

Fig. 10 is a photograph of a cross section (cross section taken along line A-A in Fig. 2) of a framework of a metal porous body No. 1 fabricated in an Example, observed with the scanning electron microscope.

Fig. 11 is a view showing a result of distribution of nickel in the cross section (cross section taken along line A-A in Fig. 2) of the framework of metal porous body No. 1 fabricated in the Example, measured by energy dispersive spectroscopy.

Fig. 12 is a view showing a result of distribution of chromium in the cross section (cross section taken along line A-A in Fig. 2) of the framework of metal porous body No. 1 fabricated in the Example, measured by energy dispersive spectroscopy.

Fig. 13 is a view showing a result of distribution of silver in the cross section (cross section taken along line A-A in Fig. 2) of the framework of metal porous body No. 1 fabricated in the Example, measured by energy dispersive spectroscopy.

DETAILED DESCRIPTION

[Problem to be Solved by the Present Disclosure]

Of various fuel cells, a solid oxide fuel cell (SOFC, hereinafter also referred to as an "SOFC") requires to be operated at a higher temperature, when compared with a polymer electrolyte fuel cell (PEFC) and a phosphoric acid fuel cell (PAFC). However, the SOFC has such advantages that it has a high power generation efficiency, it does not require an expensive catalyst such as platinum, and it can utilize exhaust heat. Thus, development thereof is actively promoted.

The SOFC includes a solid electrolyte layer formed of a solid oxide, and electrode layers formed to be stacked on both sides with the solid electrolyte layer sandwiched therebetween. The SOFC is further provided with a porous current collector in order to collect and take out electrons generated at an electrode. This current collector often has a function as a gas diffusion layer in order to diffuse gas supplied to the electrode and achieve efficient power generation.

Generally, a carbon structure or a stainless steel (SUS) structure is used for a gas diffusion layer of a fuel cell. A groove serving as a gas flow path is formed in the carbon structure or the SUS structure. The groove has a width of about 500 $\mu$m, and has a shape of one continuous line. Since the groove is provided in about half of the area of a surface in which the carbon structure or the SUS structure is in contact with an electrode, the gas diffusion layer has a porosity of about 50%.

The gas diffusion layer as described above does not have so high porosity, and has a large pressure loss. Therefore, it is difficult to increase output while reducing the size of the fuel cell.

The present inventors have considered using a metal porous body having a framework of a three-dimensional network structure, instead of the carbon structure or the SUS structure, as a current collector and gas diffusion layer of a fuel cell.

Since the SOFC is operated at a high temperature of about 800°C, the metal porous body is required to have a high heat resistance when it is used as a current collector and gas diffusion layer. In addition, since oxidation proceeds under a high temperature on an air electrode side, the metal porous body is also required to have oxidation resistance.

Examples of metal porous bodies excellent in high heat resistance include a metal porous body having a framework made of a nickel-chromium (NiCr) alloy or a nickel-chromium-tin (NiCrSn) alloy. These metal porous bodies further have corrosion resistance and oxidation resistance, and thus are suitable as a current collector and gas diffusion layer for an oxygen electrode of the SOFC.

However, when the content of chromium (Cr) is increased in order to improve the effect of high heat resistance, chromium sublimes and scatters under a high temperature of about 800°C, which may deteriorate catalyst performance of the fuel cell. In addition, since chromium has a low electrical conductivity, there is also room for improvement in terms of improving current collecting performance in the oxygen electrode of the SOFC.

Accordingly, in view of the aforementioned problems, an object of the present invention is to provide a metal porous body which has a high heat resistance, has a high electrical conductivity, and can also be suitably used as a current collector and gas diffusion layer for an oxygen electrode of an SOFC.

[Advantageous Effect of the Present Disclosure]

According to the present disclosure, it is possible to provide a metal porous body which has a high heat resistance, has a high electrical conductivity, and can also be suitably used as a current collector and gas diffusion layer for an oxygen electrode of an SOFC.

[Description of Embodiments]

First, an embodiment of the present invention is described in list form.

(1) A metal porous body in accordance with one aspect of the present invention is a metal porous body having a flat plate shape and having continuous pores, a framework of the metal porous body having an alloy layer containing nickel and chromium, a silver layer being formed on a surface of the alloy layer.
According to the aspect of the invention according to (1) described above, it is possible to provide a metal porous body which has a high heat resistance, has a high electrical conductivity, and can also be suitably used as a current collector and gas diffusion layer for an oxygen electrode of an SOFC.
(2) Preferably, in the metal porous body according to (1) described above, the alloy layer further contains tin.
According to the aspect of the invention according to (2) described above, it is possible to provide a composite metal porous body having a higher corrosion resistance.
(3) Preferably, in the metal porous body according to (1) or (2) described above, the alloy layer is a NiCr alloy containing Ni as a main component, or a NiSnCr alloy containing Ni as a main component.
According to the aspect of the invention according to (3) described above, it is possible to provide a metal porous body having a high corrosion resistance and a high strength.
It should be noted that the main component of the alloy layer means a component having the largest content ratio in the alloy layer.
(4) Preferably, in the metal porous body according to any one of (1) to (3) described above, the silver layer has an average film thickness of more than or equal to 1 $\mu$m.
According to the aspect of the invention according to (4) described above, it is possible to provide a metal porous body having a higher electrical conductivity.
(5) Preferably, in the metal porous body according to any one of (1) to (4) described above, a shape of the framework is a three-dimensional network structure.
(6) Preferably, the metal porous body according to any one of (1) to (5) described above has a porosity of more than or equal to 60% and less than or equal to 98%.
(7) Preferably, the metal porous body according to any one of (1) to (6) described above has an average pore diameter of more than or equal to 50 $\mu$m and less than or equal to 5000 $\mu$m.
According to the aspect of the invention according to (5) to (7) described above, it is possible to provide a metal porous body which is lightweight, has a large surface area, and has a high gas diffusion performance when it is used as a gas diffusion layer of a fuel cell.
(8) Preferably, the metal porous body according to any one of (1) to (7) described above has a thickness of more than or equal to 500 $\mu$m and less than or equal to 5000 $\mu$m.
According to the aspect of the invention according to (8) described above, it is possible to provide a metal porous body which is lightweight and has a high strength.
It should be noted that the thickness of the metal porous body described above means a distance between main surfaces of the metal porous body having a flat plate shape.
(9) A solid oxide fuel cell in accordance with one aspect of the present invention is a solid oxide fuel cell including the metal porous body according to any one of (1) to (8) described above, as a gas diffusion layer.
According to the aspect of the invention according to (9) described above, it is possible to provide a solid oxide fuel cell which has a high power generation efficiency, and is small-sized and lightweight.
(10) A method for producing a metal porous body in accordance with one aspect of the present invention is a method for producing the metal porous body according to (1) described above, including: preparing a porous body base material having a flat plate shape and having continuous pores; and plating silver on a surface of a framework of the porous body base material, the framework of the porous body base material having an alloy layer containing nickel and chromium.
According to the aspect of the invention according to (10) described above, it is possible to provide a method for producing the metal porous body according to (1) described above.
(11) Preferably, in the method for producing the metal porous body according to (10) described above, a shape of the framework of the porous body base material is a three-dimensional network structure.

According to the aspect of the invention according to (11) described above, it is possible to provide a method for producing the metal porous body according to (5) described above.

[Details of Embodiment]

Specific examples of the metal porous body, the solid oxide fuel cell, and the method for producing the metal porous body in accordance with the embodiment of the present invention are described in more detail below. It should be noted that the present invention is not limited to these examples but is defined by the scope of the claims, and is intended to include any modifications within the scope and meaning equivalent to the scope of the claims.

<Metal Porous Body>

The metal porous body in accordance with the embodiment of the present invention has continuous pores, and has a flat plate shape as a whole. The continuous pores only have to be formed in the metal porous body to penetrate opposite main surfaces. From the viewpoint of increasing the surface area of the metal porous body, it is preferable that as many continuous pores as possible are formed. Examples of the shape of the framework of the metal porous body include a mesh shape such as that of a punching metal or an expanded metal, and a shape such as a three-dimensional network structure.

The framework of the metal porous body has an alloy layer containing nickel and chromium, and a silver layer is formed on a surface of the alloy layer. Preferably, the silver layer covers the entire surface of the alloy layer containing nickel and chromium. Here, the description "covering the entire surface" includes a state where the alloy layer containing nickel and chromium is not exposed at a surface at all, and a state where the alloy layer containing nickel and chromium is partially exposed due to a pinhole, a crack, or the like, to an extent not to deteriorate the performance of an SOFC.

When a conventional metal porous body containing chromium is used as a gas diffusion layer of the SOFC, chromium sublimes under a high temperature, which may deteriorate catalyst performance or reduce the strength of a framework. In contrast, the metal porous body in accordance with the embodiment of the present invention can suppress sublimation of chromium because the silver layer is formed on the surface of the framework. Chromium is hardly diffused into the silver layer even under a high temperature environment at about 800°C. Thus, also when the metal porous body in accordance with the embodiment of the present invention is used as a gas diffusion layer for an air electrode of the SOFC, it is possible to provide an SOFC having a high power generation efficiency, without causing deterioration of catalyst performance or reduction of the strength of the framework. In addition, since the silver layer formed on the surface of the framework of the metal porous body has a very high electrical conductivity, the metal porous body in accordance with the embodiment of the present invention satisfactorily functions not only as a gas diffusion layer, but also as a current collector, in the fuel cell.

The silver layer preferably has an average film thickness of more than or equal to 1 $\mu$m. In the case where the silver layer has an average film thickness of more than or equal to 1 $\mu$m, sublimation of chromium can be fully suppressed when the metal porous body is used as a gas diffusion layer of the SOFC. In addition, since the effect of suppressing sublimation of chromium is saturated when the silver layer has a thickness of about 50 $\mu$m, the silver layer preferably has an average film thickness of about less than or equal to 50 $\mu$m, from the viewpoint of the production cost of the metal porous body and the viewpoint of increasing the porosity of the metal porous body. From these viewpoints, the silver layer more preferably has an average film thickness of more than or equal to 3 $\mu$m and less than or equal to 30 $\mu$m, and further preferably has an average film thickness of more than or equal to 5 $\mu$m and less than or equal to 20 $\mu$m.

The alloy layer is preferably a NiCr alloy which is an alloy of nickel as a main component and chromium. The alloy layer may further contain tin for the purpose of improving corrosion resistance and the like. For example, the alloy layer is preferably a NiSnCr alloy which is an alloy of nickel as a main component, tin, and chromium. By using the NiCr alloy containing Ni as the main component or the NiSnCr alloy containing Ni as the main component, the metal porous body can have a high corrosion resistance and a high strength.

It should be noted that, in addition to the alloy described above, the framework of the metal porous body may contain another component intentionally or inevitably. For example, aluminum, titanium, molybdenum, tungsten, or the like may be contained for the purpose of improving corrosion resistance and strength.

The content of chromium in the metal porous body is preferably about more than or equal to 3 mass% and less than or equal to 50 mass%. In the case where the content of chromium in the metal porous body is more than or equal to 3 mass%, the framework of the metal porous body can have a higher corrosion resistance and a high strength. In addition, in the case where the content of chromium in the metal porous body is less than or equal to 50 mass%, time for chromizing treatment can be shortened and productivity is improved. From these viewpoints, the content of chromium in the metal porous body is more preferably more than or equal to 5 mass% and less than or equal to 47 mass%, and is further preferably more than or equal to 10 mass% and less than or equal to 45 mass%.

When the alloy layer contains tin, the content of tin in the metal porous body is preferably about more than or equal to 3 mass% and less than or equal to 50 mass%. In the case where the content of tin in the metal porous body is more than or equal to 3 mass%, the framework of the metal porous body can have a higher corrosion resistance and a high strength. In addition, in the case where the content of tin in the metal porous body is less than or equal to 50 mass%, time for tin plating can be shortened and productivity is improved. From these viewpoints, the content of tin in the metal porous body is more preferably more than or equal to 5 mass% and less than or equal to 47 mass%, and is further preferably more than or equal to 10 mass% and less than or equal to 45 mass%.

As described above, although the shape of the framework of the metal porous body may be a mesh shape, the shape of the framework is more preferably a three-dimensional network structure. In the case where the shape of the framework is the three-dimensional network structure, the surface area can be further increased, when compared with the shape such as that of a punching metal or an expanded metal. In addition, since the shape of the framework is more complicated, the metal porous body can diffuse more gas when it is used as a gas diffusion layer of the fuel cell.

In the following, the metal porous body in accordance with the embodiment of the present invention is described in more detail, taking the case where the shape of the framework of the metal porous body is the three-dimensional network structure as an example.

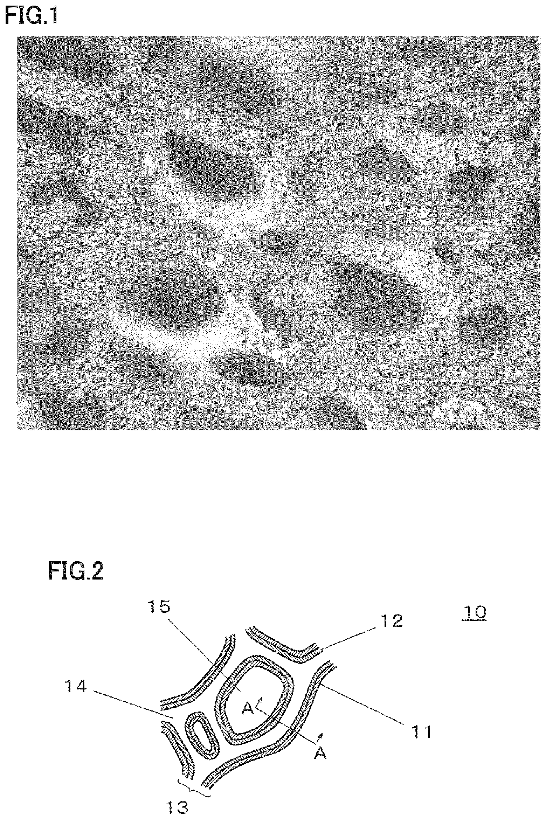

Fig. 1 shows an enlarged photograph showing a framework of a three-dimensional network structure of an example of the metal porous body in accordance with the embodiment of the present invention. In addition, Fig. 2 shows an enlarged schematic view showing an enlarged cross section of the metal porous body shown in Fig. 1.

In the case where the shape of the framework has the three-dimensional network structure, a framework 13 of a metal porous body 10 typically has a hollow interior 14 as shown in Fig. 2. In addition, framework 13 has a structure in which a silver layer 11 is formed on a surface of an alloy layer 12. Further, metal porous body 10 has continuous pores, and a pore portion 15 is formed by framework 13.

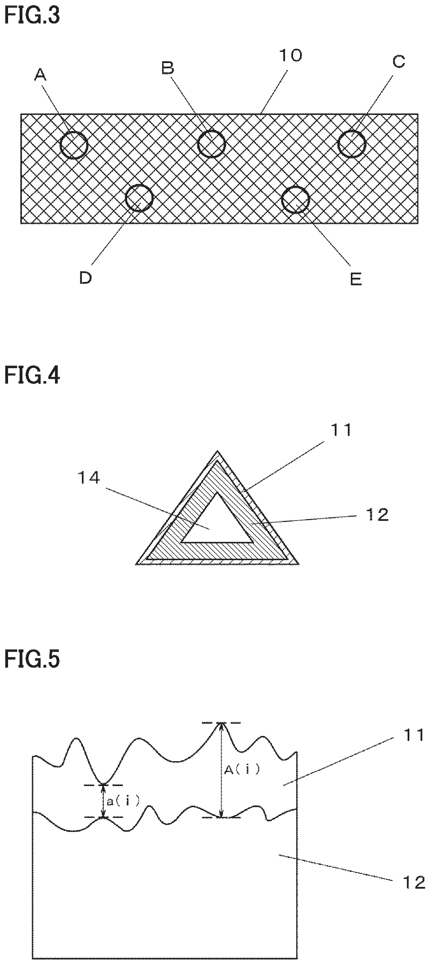

It should be noted that, although the thickness of silver layer 11 is shown in Fig. 2 to be substantially the same as that of alloy layer 12, silver layer 11 preferably has an average film thickness of more than or equal to 1 $\mu$m and less than or equal to 50 $\mu$m as described above, and the thickness of silver layer 11 is smaller than that of alloy layer 12. The average film thickness of silver layer 11 is measured by observing a cross section of framework 13 of metal porous body 10 with an electron microscope as follows. Figs. 3 to 7 schematically show a method for measuring the average film thickness of silver layer 11.

First, as shown for example in Fig. 3, metal porous body 10 having a flat plate shape when viewed planarly is arbitrarily divided into areas, and five areas (area A to area E) are selected as measurement areas. Then, one spot in framework 13 of metal porous body 10 is arbitrarily selected in each area, and a cross section of the framework taken along a line A-A shown in Fig. 2 is observed with a scanning electron microscope (SEM). The line A-A cross section of framework 13 of metal porous body 10 has a substantially triangular shape as shown in Fig. 4. In the example shown in Fig. 4, the framework of metal porous body 10 has hollow interior 14, and a film of alloy layer 12 faces the hollow interior. In addition, silver layer 11 is formed to cover an outer surface of alloy layer 12.

When it is possible to observe the entire line A-A cross section of the framework with the SEM, magnification is further increased and set in such a manner that entire silver layer 11 in a thickness direction can be observed and the thickness direction can be observed as large as possible in one field of view. Then, the same line A-A cross section of the framework is observed in different fields of view to determine a maximum thickness and a minimum thickness of silver layer 11 in each of three different fields of view. In every area, the maximum thickness and the minimum thickness of the silver layer are measured in each of the three fields of view for the line A-A cross section of the framework at one arbitrary spot, and an averaged value thereof is defined as the average film thickness of the silver layer.

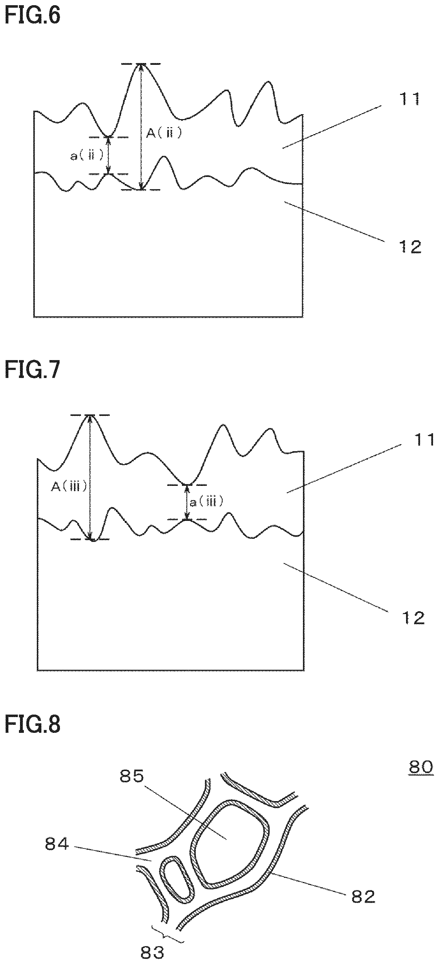

As an example, Fig. 5 shows a conceptual diagram of a field of view (i) obtained when the line A-A cross section of the framework at one arbitrary spot in area A of metal porous body 10 shown in Fig. 3 is observed with the SEM. Similarly, Fig. 6 shows a conceptual diagram of another field of view (ii) of the same line A-A cross section of the framework, and Fig. 7 shows a conceptual diagram of still another field of view (iii).

In each of the fields of view (i) to (iii) obtained when silver layer 11 in the line A-A cross section of the framework at one arbitrary spot in area A is observed with the SEM, a maximum thickness of silver layer 11 (a maximum thickness A(i), a maximum thickness A(ii), a maximum thickness A(iii)) and a minimum thickness of silver layer 11 (a minimum thickness a(i), a minimum thickness a(ii), a minimum thickness a(iii)) are measured. The thickness of silver layer 11 is defined a length of silver layer 11 extending from the surface of alloy layer 12 in a perpendicular direction. It should be noted that, if a silver alloy layer is formed between silver layer 11 and alloy layer 12, the thickness of silver layer 11 is defined as the sum of lengths of the silver alloy layer and silver layer 11 extending from the surface of alloy layer 12 in the perpendicular direction.

Thereby, maximum thicknesses A(i) to A(iii) and minimum thicknesses a(i) to a(iii) in the three different fields of view are determined for the line A-A cross section of the framework at one arbitrary spot in area A. Similarly, in each of areas B, C, D and E, maximum thicknesses and minimum thicknesses of silver layer 11 in three fields of view are measured for the line A-A cross section of the framework at one arbitrary spot, in the same manner as in area A.

An average of maximum thickness A(i) to maximum thickness E(iii) and minimum thickness a(i) to minimum thickness e(iii) of silver layer 11 measured as described above is defined as the average film thickness of silver layer 11.

The metal porous body in accordance with the embodiment of the present invention preferably has a porosity of more than or equal to 60% and less than or equal to 98%. In the case where the metal porous body has a porosity of more than or equal to 60%, the metal porous body can be significantly lightweight, and can also improve gas diffusivity when it is used as a gas diffusion layer of the fuel cell. In addition, in the case where the metal porous body has a porosity of less than or equal to 98%, the metal porous body can have a sufficient strength. From these viewpoints, the metal porous body more preferably has a porosity of more than or equal to 70% and less than or equal to 98%, and further preferably has a porosity of more than or equal to 80% and less than or equal to 98%.

The porosity of the metal porous body is defined by the following equation:

$$\text{Porosity (\%)} = (1-(Mp/(Vp \times dp))) \times 100,$$

where

Mp: the mass of the metal porous body [g],
Vp: the volume of the appearance shape in the metal porous body [cm$^3$], and
dp: the density of metals constituting the metal porous body [g/cm$^3$].

The metal porous body preferably has an average pore diameter of more than or equal to 50 $\mu$m and less than or equal to 5000 $\mu$m. In the case where the average pore diameter is more than or equal to 50 $\mu$m, the metal porous body can have an increased strength, and can also improve gas diffusivity when it is used as a gas diffusion layer of the fuel cell. In the case where the average pore diameter is less than or equal to 5000 $\mu$m, the metal porous body can have increased bending properties. From these viewpoints, the metal porous body more preferably has an average pore diameter of more than or equal to 100 $\mu$m and less than or equal to 500 $\mu$m, and further preferably has an average pore diameter of more than or equal to 150 $\mu$m and less than or equal to 400 $\mu$m.

The average pore diameter of the metal porous body is defined by observing the surface of the metal porous body with a microscope or the like, counting the number of pores per inch (25.4 mm), and calculating the average pore diameter as 25.4 mm/the number of pores.

The metal porous body preferably has a thickness of more than or equal to 500 $\mu$m and less than or equal to 5000 $\mu$m. In the case where the metal porous body has a thickness of more than or equal to 500 $\mu$m, the metal porous body can have a sufficient strength, and can also have a high gas diffusion performance when it is used as a gas diffusion layer of the fuel cell. In the case where the metal porous body has a thickness of less than or equal to 5000 $\mu$m, the metal porous body can be lightweight. From these viewpoints, the metal porous body more preferably has a thickness of more than or equal to 600 $\mu$m and less than or equal to 2000 $\mu$m, and further preferably has a thickness of more than or equal to 700 $\mu$m and less than or equal to 1500 $\mu$m.

<Solid Oxide Fuel Cell>

The solid oxide fuel cell in accordance with the embodiment of the present invention only has to include the metal porous body in accordance with the embodiment of the present invention described above as a gas diffusion layer, and for other components, the same components as those of a conventional solid oxide fuel cell can be adopted. It should be noted that the metal porous body in accordance with the embodiment of the present invention can act not only as a gas diffusion layer but also as a current collector.

Generally, the solid oxide fuel cell is operated at a high temperature of about 800°C, and conventionally, when a material containing chromium is used as a gas diffusion layer and a current collector, chromium sublimes and scatters, which may deteriorate catalyst performance. Further, when tin is contained, tin also sublimes and scatters, which may embrittle the gas diffusion layer and the current collector.

In the solid oxide fuel cell in accordance with the embodiment of the present invention, although the metal porous body used as a gas diffusion layer contains chromium or tin, chromium or tin does not scatter because the silver layer is formed on the surface of the framework of the metal porous body. Thus, the metal porous body in accordance with the embodiment of the present invention has no worries about deterioration of catalyst performance and embrittlement of a gas diffusion layer. Further, since the metal porous body has a high porosity, the metal porous body can diffuse gas efficiently. In addition, since the metal porous body also has a high electrical conductivity, a solid oxide fuel cell having a high power generation efficiency can be provided.

<Method for Producing Metal Porous Body>

The method for producing the metal porous body in accordance with the embodiment of the present invention is a method for producing the metal porous body in accordance with the embodiment of the present invention described above, including the steps of preparing a porous body base material having a flat plate shape and having continuous pores, and plating silver on a surface of a framework of the porous body base material. The steps are described in detail below.

(Preparation Step)

A preparation step is the step of preparing a porous body base material having continuous pores and having a flat plate shape as a whole. The porous body base material serves as a base material in the metal porous body in accordance with the embodiment of the present invention, that is, alloy layer 12. Thus, in the porous body base material prepared in this step, although the shape of a framework may be a mesh shape such as that of a punching metal or an expanded metal, the shape of the framework is more preferably a three-dimensional network structure.

Further, in the porous body base material, the framework only has to contain nickel and chromium. The framework of the porous body base material may further contain tin. Contents of chromium and tin are the same as the contents thereof in the alloy layer described for the metal porous body in accordance with the embodiment of the present invention.

Fig. 8 shows an enlarged schematic view showing an enlarged cross section of an example of the porous body base material having the framework of the three-dimensional network structure. As shown in Fig. 8, a framework 83 of a porous body base material 80 is formed by an alloy layer 82. In porous body base material 80, framework 83 typically has a hollow interior 84. Further, porous body base material 80 has continuous pores, and a pore portion 85 is formed by framework 83.

As the porous body base material having the framework of the three-dimensional network structure, for example, Celmet (a metal porous body containing Ni as a main component; "Celmet" is a registered trademark) manufactured by Sumitomo Electric Industries, Ltd. can be preferably used.

Since the metal porous body in accordance with the embodiment of the present invention is formed by forming the silver layer on the surface of the framework of porous body base material 80, the porosity and the average pore diameter of the metal porous body are substantially equal to the porosity and the average pore diameter of porous body base material 80. Thus, the porosity and the average pore diameter of porous body base material 80 may be selected as appropriate according to the porosity and the average pore diameter of the metal porous body to be produced. The porosity and the average pore diameter of porous body base material 80 are defined in the same manner as the porosity and the average pore diameter of the metal porous body.

If a desired porous body base material is not available in the market, it may be produced by the following method.

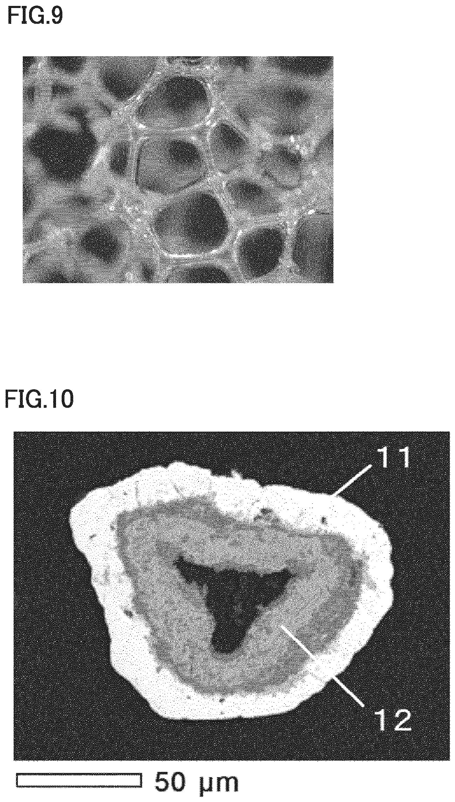

First, a sheet-shaped resin molded body having a framework of a three-dimensional network structure (hereinafter also simply referred to as a "resin molded body") is prepared. Urethane resin, melamine resin, or the like can be used as the resin molded body. Fig. 9 shows a photograph of foamed urethane resin having a framework of a three-dimensional network structure.

Then, a conductive treatment step of forming a conductive layer on a surface of the framework of the resin molded body is performed. Conductive treatment can be performed, for example, by applying a conductive paint containing conductive particles such as carbon or conductive ceramic, by forming a layer of a conductive metal such as nickel or copper by electroless plating, or by forming a layer of a conductive metal such as aluminum by deposition or sputtering.

Subsequently, a step of electroplating nickel is performed, using the resin molded body having the conductive layer formed on the surface of the framework, as a base material. Nickel electroplating may be performed by a known technique.

In order to produce a NiCr alloy containing Ni as a main component or a NiSnCr alloy containing Ni as a main component by containing chromium and/or tin into a porous body base material, for example, chromium powder and/or tin powder may be mixed into the conductive paint, and the conductive paint may be used in the conductive treatment step.

In addition, a NiCr alloy or a NiSnCr alloy may be formed by performing chromizing treatment on a porous base material made of nickel, and further plating tin and performing heat treatment.

The chromizing treatment may be any treatment which allows chromium to be diffused and permeated into the porous base material made of nickel, and any known technique can be adopted. For example, a powder packing method can be adopted, in which the porous base material made of nickel is filled with a permeating material prepared by mixing chromium powder, a halide, and alumina powder, and is heated in a reducing atmosphere. It is also possible to dispose the permeating material and the porous base material made of nickel with a space therebetween, heat the materials in a reducing atmosphere, form a gas of the permeating material, and cause the permeating material to be permeated into nickel on a surface of the porous base material.

Tin plating can be performed, for example, as follows. Specifically, tin can be plated by preparing a plating solution having a composition of 55 g/L of stannous sulfate, 100 g/L of sulfuric acid, 100 g/L of cresol sulfonic acid, 2 g/L of gelatin, and 1 g/L of β naphthol as a sulfuric acid bath, setting a negative electrode current density to 2 A/dm$^2$, setting a positive electrode current density to 1 A/dm$^2$ or less, setting the temperature to 20°C, and setting stirring (cathode rocking) to 2 m/minute.

Finally, a removal step of removing the resin molded body used as the base material is performed by heat treatment or the like, and thereby a porous body base material having a framework of a three-dimensional network structure can be obtained.

The porosity and the average pore diameter of the porous body base material are substantially equal to the porosity and the average pore diameter of the resin molded body used as the base material. Thus, the porosity and the average pore diameter of the resin molded body may be selected as appropriate according to the porosity and the average pore diameter of the porous body base material to be produced. The porosity and the average pore diameter of the resin molded body are defined in the same manner as the porosity and the average pore diameter of the metal porous body described above.

(Silver Plating Step)

A silver plating step is the step of plating silver on a surface of a framework of the porous body base material.

The method of plating silver is not particularly limited, and can be performed by any well-known method. For example, silver is preferably plated by electroplating in a silver methanesulfonate-based plating bath. In addition, it is preferable to perform silver strike plating before the silver plating.

<Method for Producing Hydrogen, and Hydrogen Producing Apparatus>

The metal porous body in accordance with the embodiment of the present invention can be suitably used, for example, as a gas diffusion layer for a fuel cell or an electrode for producing hydrogen by water electrolysis. Systems for producing hydrogen are roughly classified into [1] alkaline water electrolysis system, [2] PEM (Polymer Electrolyte Membrane) system, and [3] SOEC (Solid Oxide Electrolysis Cell) system, and the metal porous body can be suitably used for any of these systems.

The alkaline water electrolysis system in [1] described above is a system of electrolyzing water by immersing a positive electrode and a negative electrode in a strong alkaline aqueous solution, and applying a voltage. A contact area between water and the electrodes is increased by using the metal porous body as the electrodes, and the efficiency of water electrolysis can be improved.

In a method for producing hydrogen by the alkaline water electrolysis system, the average pore diameter of the metal porous body when viewed planarly is preferably more than or equal to 100 μm and less than or equal to 5000 μm. In the case where the average pore diameter of the metal porous body when viewed planarly is more than or equal to 100 μm, it is possible to suppress the contact area between water and the electrodes from decreasing due to the reason that generated hydrogen and oxygen bubbles are clogged in pore portions of the metal porous body. In addition, in the case where the average pore diameter of the metal porous body when viewed planarly is less than or equal to 5000 μm, the surface area of the electrodes becomes sufficiently large, and the efficiency of water electrolysis can be improved. From the same viewpoint, the average pore diameter of the metal porous body when viewed planarly is more preferably more than or equal to 400 μm and less than or equal to 4000 μm.

Since the thickness of the metal porous body and the basis weight of a metal may cause deflection or the like when the electrode area becomes large, the thickness and the basis weight may be selected as appropriate according to the scale of equipment. The basis weight of the metal is preferably about more than or equal to 200 g/m$^2$ and less than or equal to 2000 g/m$^2$, more preferably about more than or equal to 300 g/m$^2$ and less than or equal to 1200 g/m$^2$, and further preferably about more than or equal to 400 g/m$^2$ and less than or equal to 1000 g/m$^2$. In order to achieve both escape of bubbles and securing of the surface area, a plurality of metal porous bodies having different average pore diameters can also be used in combination.

The PEM system in [2] described above is a method of electrolyzing water using a solid polymer electrolyte membrane. A positive electrode and a negative electrode are disposed on both sides of the solid polymer electrolyte membrane, and a voltage is applied while water is introduced to the positive electrode side, whereby hydrogen ions generated by water electrolysis are transferred to the negative electrode side through the solid polymer electrolyte membrane, and are taken out as hydrogen from the negative electrode side. The operating temperature is about 100°C. This system has the same configuration as that of a polymer electrolyte fuel cell, which generates electric power by using hydrogen and oxygen and discharges water, but performs a completely opposite operation. Because the positive electrode side and the negative electrode side are completely separated from each other, this system has an advantage that high purity hydrogen can be taken out. Since water and hydrogen gas are required to pass through both the positive electrode and the negative electrode, a conductive porous body is required for the electrodes.

Since the metal porous body in accordance with the embodiment of the present invention has a high porosity and a good electrical conductivity, it can be suitably used not only for the polymer electrolyte fuel cell but also for the water electrolysis by the PEM system. In a method for producing hydrogen by the PEM system, the average pore diameter of the metal porous body when viewed planarly is preferably more than or equal to 150 $\mu$m and less than or equal to 1000 $\mu$m. In the case where the average pore diameter of the metal porous body when viewed planarly is more than or equal to 150 $\mu$m, it is possible to suppress a contact area between water and the solid polymer electrolyte membrane from decreasing due to the reason that generated hydrogen and oxygen bubbles are clogged in pore portions of the metal porous body. In addition, in the case where the average pore diameter of the metal porous body when viewed planarly is less than or equal to 1000 $\mu$m, it is possible to ensure sufficient water retention so as to suppress water from passing through before getting involved in reaction, enabling the water electrolysis to be performed efficiently. From the same viewpoint, the average pore diameter of the metal porous body when viewed planarly is more preferably more than or equal to 200 $\mu$m and less than or equal to 700 $\mu$m, and further preferably more than or equal to 300 $\mu$m and less than or equal to 600 $\mu$m.

The thickness of the metal porous body and the basis weight of a metal may be selected as appropriate according to the scale of equipment. However, if the porosity is too small, loss of pressure for urging water to pass through the metal porous body may become large, and thus, it is preferable to adjust the thickness and the basis weight of the metal such that the porosity is more than or equal to 30%. Further, in the PEM system, since conduction between the solid polymer electrolyte membrane and the electrodes is established by pressure bonding, it is necessary to adjust the basis weight of the metal such that an increase in electrical resistance due to deformation and creep during pressurization falls within a practically acceptable range.

The basis weight of the metal is preferably about more than or equal to 200 g/m$^2$ and less than or equal to 2000 g/m$^2$, more preferably about more than or equal to 300 g/m$^2$ and less than or equal to 1200 g/m$^2$, and further preferably about more than or equal to 400 g/m$^2$ and less than or equal to 1000 g/m$^2$. Further, in order to achieve both securing of the porosity and electrical connection, a plurality of metal porous bodies having different average pore diameters can also be used in combination.

The SOEC system in [3] described above is a method of electrolyzing water using a solid oxide electrolyte membrane, and has different configurations depending on whether the electrolyte membrane is a proton-conductive membrane or an oxygen ion-conductive membrane. In the oxygen ion-conductive membrane, hydrogen is generated on the negative electrode side supplied with water vapor, and thus hydrogen purity is degraded. For this reason, it is preferable to use the proton-conductive membrane from the viewpoint of hydrogen production.

A positive electrode and a negative electrode are disposed on both sides of the proton-conductive membrane, and a voltage is applied while water vapor is introduced to the positive electrode side, whereby hydrogen ions generated by water electrolysis are transferred to the negative electrode side through the solid oxide electrolyte membrane, and only hydrogen is taken out on the negative electrode side. The operating temperature is about more than or equal to 600°C and less than or equal to 800°C. This system has the same configuration as that of a solid oxide fuel cell, which generates electric power by using hydrogen and oxygen and discharges water, but performs a completely opposite operation.

Since water vapor and hydrogen gas are required to pass through both the positive electrode and the negative electrode, a conductive porous body withstanding a high-temperature oxidation atmosphere particularly on the positive electrode side is required for the electrodes. Since the metal porous body in accordance with the embodiment of the present invention has a high porosity, a good electrical conductivity, and high oxidation resistance and heat resistance, it can be suitably used not only for the solid oxide fuel cell but also for the water electrolysis by the SOEC system. Since a high oxidation resistance is required for the electrode on the side of the oxidation atmosphere, it is preferable to use the metal porous body containing chromium or tin.

In a method for producing hydrogen by the SOEC system, the average pore diameter of the metal porous body when viewed planarly is preferably more than or equal to 150 $\mu$m and less than or equal to 1000 $\mu$m. In the case where the average pore diameter of the metal porous body when viewed planarly is more than or equal to 150 $\mu$m, it is possible to suppress a contact area between water vapor and the solid oxide electrolyte membrane from decreasing due to the reason that water vapor and generated hydrogen are clogged in pore portions of the metal porous body. In addition, in the case where the average pore diameter of the metal porous body when viewed planarly is less than or equal to 1000 $\mu$m, it is possible to suppress water vapor from passing through before fully getting involved in reaction due to a too small pressure loss. From the same viewpoint, the average pore diameter of the metal porous body when viewed planarly is more preferably more than or equal to 200 $\mu$m and less than or equal to 700 $\mu$m, and further preferably more than or equal to 300 $\mu$m and less than or equal to 600 $\mu$m .

The thickness of the metal porous body and the basis weight of a metal may be selected as appropriate according to the scale of equipment. However, if the porosity is too small, loss of pressure for introducing water vapor may become large, and thus, it is preferable to adjust the thickness and the basis weight of the metal such that the porosity is more than or equal to 30%. Further, in the SOEC system, since conduction between the solid oxide electrolyte membrane and the electrodes is established by pressure bonding, it is necessary to adjust the basis weight of the metal such that an increase in electrical resistance due to deformation and creep during pressurization falls within a practically acceptable range. The basis weight of the metal is preferably about more than or equal to 200 g/m$^2$ and less than or equal to 2000 g/m$^2$, more preferably about more than or equal to 300 g/m$^2$ and less than or equal to 1200 g/m$^2$, and further preferably about more than or equal to 400 g/m$^2$ and less than or equal to 1000 g/m$^2$. Further, in order to achieve both securing of the porosity and electrical connection, a plurality of metal porous bodies having different average pore diameters can also be used in combination.

<Notes>

The above description includes features noted below.

(Note 1)
A method for producing hydrogen by electrolyzing water using a metal porous body as an electrode,

the metal porous body being a metal porous body having a flat plate shape and having continuous pores,
a framework of the metal porous body having an alloy layer containing nickel and chromium,
a silver layer being formed on a surface of the alloy layer.

(Note 2)
The method for producing hydrogen according to Note 1, wherein the alloy layer further contains tin.
(Note 3)
The method for producing hydrogen according to Note 1 or 2, wherein the alloy layer is a NiCr alloy containing Ni as a main component, or a NiSnCr alloy containing Ni as a main component.
(Note 4)
The method for producing hydrogen according to any one of Notes 1 to 3, wherein the silver layer has an average film thickness of more than or equal to 1 μm.
(Note 5)
The method for producing hydrogen according to any one of Notes 1 to 4, wherein a shape of the framework is a three-dimensional network structure.
(Note 6)
The method for producing hydrogen according to any one of Notes 1 to 5, wherein the metal porous body has a porosity of more than or equal to 60% and less than or equal to 98%.
(Note 7)
The method for producing hydrogen according to any one of Notes 1 to 6, wherein the metal porous body has an average pore diameter of more than or equal to 50 μm and less than or equal to 5000 μm.
(Note 8)
The method for producing hydrogen according to any one of Notes 1 to 7, wherein the metal porous body has a thickness of more than or equal to 500 μm and less than or equal to 5000 μm.
(Note 9)
The method for producing hydrogen according to any one of Notes 1 to 8, wherein the water is a strong alkaline aqueous solution.
(Note 10)
The method for producing hydrogen according to any one of Notes 1 to 8, wherein the metal porous bodies are disposed on both sides of a solid polymer electrolyte membrane and brought into contact with the solid polymer electrolyte membrane, the metal porous bodies act as a positive electrode and a negative electrode, respectively, and hydrogen is generated on the negative electrode side by supplying water to the positive electrode side and electrolyzing the water.
(Note 11)
The method for producing hydrogen according to any one of Notes 1 to 8, wherein the metal porous bodies are disposed on both sides of a solid oxide electrolyte membrane and brought into contact with the solid oxide electrolyte membrane, the metal porous bodies act as a positive electrode and a negative electrode, respectively, and hydrogen is generated on the negative electrode side by supplying water vapor to the positive electrode side and electrolyzing water.
(Note 12)
A hydrogen producing apparatus capable of generating hydrogen by electrolyzing water, comprising:

a metal porous body having a flat plate shape and having continuous pores, as an electrode, wherein a framework of the metal porous body has an alloy layer containing nickel and chromium, and a silver layer is formed on a surface of the alloy layer.

(Note 13)
The hydrogen producing apparatus according to Note 12, wherein the alloy layer further contains tin.
(Note 14)
The hydrogen producing apparatus according to Note 12 or 13, wherein the alloy layer is a NiCr alloy containing Ni as a main component, or a NiSnCr alloy containing Ni as a main component.
(Note 15)
The hydrogen producing apparatus according to any one of Notes 12 to 14, wherein the silver layer has an average film thickness of more than or equal to 1 $\mu$m.
(Note 16)
The hydrogen producing apparatus according to any one of Notes 12 to 15, wherein a shape of the framework is a three-dimensional network structure.
(Note 17)
The hydrogen producing apparatus according to any one of Notes 12 to 16, wherein the metal porous body has a porosity of more than or equal to 60% and less than or equal to 98%.
(Note 18)
The hydrogen producing apparatus according to any one of Notes 12 to 17, wherein the metal porous body has an average pore diameter of more than or equal to 50 $\mu$m and less than or equal to 5000 $\mu$m.
(Note 19)
The hydrogen producing apparatus according to any one of Notes 12 to 18, wherein the metal porous body has a thickness of more than or equal to 500 $\mu$m and less than or equal to 5000 $\mu$m.
(Note 20)
The hydrogen producing apparatus according to any one of Notes 12 to 19, wherein the water is a strong alkaline aqueous solution.
(Note 21)
The hydrogen producing apparatus according to any one of Notes 12 to 19, wherein

the hydrogen producing apparatus has a positive electrode and a negative electrode on both sides of a solid polymer electrolyte membrane,
the positive electrode and the negative electrode are in contact with the solid polymer electrolyte membrane,
hydrogen can be generated on the negative electrode side by electrolyzing water supplied to the positive electrode side, and
the metal porous body is used for at least one of the positive electrode and the negative electrode.

(Note 22)
The hydrogen producing apparatus according to any one of Notes 12 to 19, wherein

the hydrogen producing apparatus has a positive electrode and a negative electrode on both sides of a solid oxide electrolyte membrane,
the positive electrode and the negative electrode are in contact with the solid oxide electrolyte membrane,
hydrogen can be generated on the negative electrode side by electrolyzing water vapor supplied to the positive electrode side, and
the metal porous body is used for at least one of the positive electrode and the negative electrode.

Examples

In the following, the present invention is described in more detail based on examples. The examples are by way of illustration only, and the metal porous body and the like of the present invention are not limited to the examples. The scope of the present invention is defined by the scope of the claims, and includes any modifications within the scope and meaning equivalent to the scope of the claims.

(Example 1)

- Preparation Step -

A porous body base material No. 1 having a framework of a three-dimensional network structure, containing Ni as a main component, and having a content of chromium of 27 mass% (Celmet manufactured by Sumitomo Electric Industries, Ltd.; "Celmet" is a registered trademark) was prepared.
Porous body base material No. 1 had a thickness of 1200 μm, a porosity of 96%, and an average pore diameter of 440 μm.

- Silver Plating Step -

Silver was plated on a surface of the framework of porous body base material No. 1 prepared above to have a basis weight of 520 g/m², and thereby a metal porous body No. 1 was obtained.
Silver plating was performed by using a silver plating solution having a composition of 2 g/L of silver potassium cyanide and 100 g/L of sodium cyanide, setting the temperature of the plating solution to 25°C and setting a current density to 2 A/dm², and applying power for 20 minutes using a stainless plate for a positive electrode. It should be noted that the current density was based on an apparent area of the porous base material.

(Example 2)

- Preparation Step -

A porous body base material No. 2 having a framework of a three-dimensional network structure, containing Ni as a main component, and having a content of chromium of 5 mass% and a content of tin of 15 mass% was prepared.
Porous body base material No. 2 was fabricated by plating tin on a surface of a framework of Celmet having a thickness of 1200 μm, a porosity of 96%, an average pore diameter of 440 μm, and a content of chromium of 6 mass% (manufactured by Sumitomo Electric Industries, Ltd.; "Celmet" is a registered trademark) to have a basis weight of 32 g/m², and performing heat treatment at 1000°C for 15 minutes.
Tin plating was performed by using a tin plating solution having a composition of 55 g/L of stannous sulfate, 100 g/L of sulfuric acid, 100 g/L of cresol sulfonic acid, 2 g/L of gelatin, and 1 g/L of β naphthol, setting the temperature of the plating solution to 20°C, and setting a current density to 2 A/dm².

- Silver Plating Step -

Silver was plated on a surface of the framework of porous body base material No. 2 prepared above to have a basis weight of 520 g/m², and thereby a metal porous body No. 2 was obtained.
Silver plating was performed as in Example 1.

- Evaluation -

Metal porous body No. 1 fabricated in the Example had a porosity of 95% and an average pore diameter of 420 μm. In addition, when the average film thickness of the silver layer of metal porous body No. 1 was measured in an electron microscope image, the silver layer had an average film thickness of 10 μm.

(Observation with Electron Microscope)

Fig. 10 shows a photograph of a cross section (cross section taken along line A-A in Fig. 2) of a framework of metal porous body No. 1 observed with a SEM. It was able to be confirmed that silver layer 11 was formed on the surface of alloy layer 12 as shown in Fig. 10.

(Heat Treatment)

Metal porous body No. 1 was subjected to heat treatment in the atmosphere at 800°C for 500 hours.

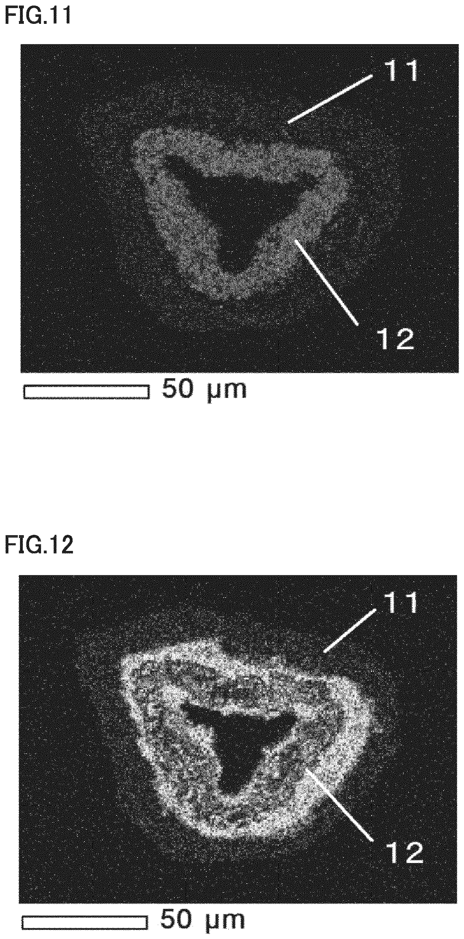

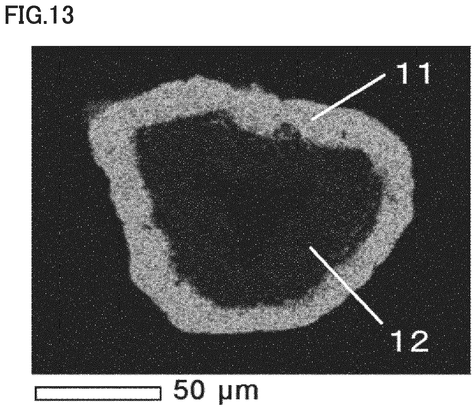

Fig. 11 shows a result of distribution of nickel in the cross section of the framework of metal porous body No. 1 subjected to heat treatment, measured by energy dispersive spectroscopy (EDX). Fig. 12 shows a result of distribution of chromium measured in the same way, and Fig. 13 shows a result of distribution of silver measured in the same way.
Fig. 10 shows a SEM photograph in an upper part, and spectra indicating the existence of elements in a lower part.

Figs. 10 to 13 show the same position in the cross section of the framework of metal porous body No. 1. It was confirmed from Figs. 12 and 13 that chromium in alloy layer 12 was hardly diffused into silver layer 11.

(Measurement of Strength)

Metal porous body No. 1 and metal porous body No. 2 were subjected to heat treatment in the atmosphere at 800°C for different time periods of 0 hours, 144 hours, 288 hours, and 500 hours. For comparison, porous body base material No. 1 was also subjected to heat treatment in the same manner.

Measurement of strength was performed on metal porous body No. 1, metal porous body No. 2, and porous body base material No. 1 subjected to heat treatment. Measurement of strength was performed using test pieces with a size of 2.5 cm × 2.5 cm, at ordinary temperature, using a compression tester. Table 1 shows results thereof.

[Table 1]

| Heat Treatment | Strength (kg/cm$^2$) | | | |
|---|---|---|---|---|
| | 0 hours | 144 hours | 288 hours | 500 hours |
| Metal Porous Body No. 1 | 75 | 75 | 75 | 75 |
| Metal Porous Body No. 2 | 75 | 75 | 75 | 75 |
| Porous Body Base Material No. 1 | 75 | 75 | 75 | 75 |

It was able to be confirmed from Table 1 that metal porous body No. 1 and metal porous body No. 2 can maintain a strength substantially the same as that of conventional porous body base material No. 1.

(Measurement of Resistance)

Metal porous body No. 1, metal porous body No. 2, and porous body base material No. 1 were subjected to heat treatment as in the case of performing measurement of strength.

Measurement of electric resistance was performed on metal porous body No. 1, metal porous body No. 2, and porous body base material No. 1 subjected to heat treatment.

Measurement of electric resistance was performed using test pieces with a size of 4 cm × 4 cm, at 800°C, by a four-probe method, to measure electric resistance in the thickness direction. Table 2 shows results thereof.

[Table 2]

| Heat Treatment | Resistance (mΩ.cm$^2$) | | | |
|---|---|---|---|---|
| | 0 hours | 144 hours | 288 hours | 500 hours |
| Metal Porous Body No. 1 | 3 | 5 | 3 | 3 |
| Metal Porous Body No. 2 | 3 | - | - | 4 |
| Porous Body Base Material No. 1 | 3 | - | 3000 | 3000 |

In Table 2, "-" means that no data was measured.

It was indicated from Table 2 that, when compared with conventional porous body base material No. 1, metal porous body No. 1 and metal porous body No. 2 exhibited extremely low resistance values even at a high temperature of 800°C, and can also be suitably used as a current collector of an SOFC.

REFERENCE SIGNS LIST

    10: metal porous body
    11: silver layer
    12: alloy layer
    13: framework
    14: interior of framework

15: pore portion
80: porous body base material
82: alloy layer
83: framework
84: interior of framework
85: pore portion

## Claims

1. A metal porous body having a flat plate shape and having continuous pores, a framework of the metal porous body having an alloy layer containing nickel and chromium,
a silver layer being formed on a surface of the alloy layer.

2. The metal porous body according to claim 1, wherein the alloy layer further contains tin.

3. The metal porous body according to claim 1 or 2, wherein the alloy layer is a NiCr alloy containing Ni as a main component, or a NiSnCr alloy containing Ni as a main component.

4. The metal porous body according to any one of claims 1 to 3, wherein the silver layer has an average film thickness of more than or equal to 1 $\mu$m.

5. The metal porous body according to any one of claims 1 to 4, wherein a shape of the framework is a three-dimensional network structure.

6. The metal porous body according to any one of claims 1 to 5, wherein the metal porous body has a porosity of more than or equal to 60% and less than or equal to 98%.

7. The metal porous body according to any one of claims 1 to 6, wherein the metal porous body has an average pore diameter of more than or equal to 50 $\mu$m and less than or equal to 5000 $\mu$m.

8. The metal porous body according to any one of claims 1 to 7, wherein the metal porous body has a thickness of more than or equal to 500 $\mu$m and less than or equal to 5000 $\mu$m.

9. A solid oxide fuel cell comprising the metal porous body according to any one of claims 1 to 8, as a gas diffusion layer.

10. A method for producing a metal porous body, comprising:

    preparing a porous body base material having a flat plate shape and having continuous pores; and
    plating silver on a surface of a framework of the porous body base material,
    the framework of the porous body base material having an alloy layer containing nickel and chromium.

11. The method for producing the metal porous body according to claim 10, wherein a shape of the framework of the porous body base material is a three-dimensional network structure.

FIG.1

FIG.2

FIG.3

FIG.4

FIG.5

FIG.6

FIG.7

FIG.8

FIG.9

FIG.10

50 μm

FIG.11

50 μm

FIG.12

50 μm

FIG.13

50 μm

## INTERNATIONAL SEARCH REPORT

| International application No. |
|---|
| PCT/JP2018/023724 |

**A. CLASSIFICATION OF SUBJECT MATTER**

Int.Cl.   H01M8/0232(2016.01)i, C22C1/08(2006.01)i, C22C13/00(2006.01)i,
          C22C19/03(2006.01)i, C22C19/05(2006.01)i, C25D7/00(2006.01)i,
          H01M4/86(2006.01)i, H01M4/88(2006.01)i, H01M8/12(2016.01)i

According to International Patent Classification (IPC) or to both national classification and IPC

**B. FIELDS SEARCHED**

Minimum documentation searched (classification system followed by classification symbols)

Int.Cl.   H01M8/0232, C22C1/08, C22C13/00, C22C19/03, C22C19/05,
          C25D7/00, H01M4/86, H01M4/88, H01M8/12

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2015/137102 A1 (SUMITOMO ELECTRIC INDUSTRIES, LTD.) 17 September 2015, paragraphs [0001], [0015]-[0018], [0021]-[0023], [0038], [0042], [0044], [0050], fig. 2-5 & EP 3118921 A1, paragraphs [0001], [0015]-[0018], [0029]-[0032], [0048], [0052], [0054], [0060], fig. 2-5 | 1-11 |
| X | JP 2015-159021 A (SUMITOMO ELECTRIC INDUSTRIES, LTD.) 03 September 2015, paragraphs [0038]-[0049], [0066] (Family: none) | 1-11 |
| X<br>A | WO 2012/073921 A1 (SUMITOMO ELECTRIC INDUSTRIES, LTD.) 07 June 2012, paragraphs [0014], [0015] & US 2013/0260280 A1, paragraphs [0017], [0018] | 1, 4, 6-10<br>2-3, 5, 11 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 September 2018 (07.09.2018) | 18 September 2018 (18.09.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/023724

| C (Continuation). | DOCUMENTS CONSIDERED TO BE RELEVANT | |
|---|---|---|
| Category* | Citation of document, with indication, where appropriate, of the relevant passages | Relevant to claim No. |
| X<br>A | JP 2012-11337 A (SUMITOMO ELECTRIC INDUSTRIES, LTD.) 19 January 2012, paragraphs [0029], [0036] (Family: none) | 1, 4, 6-10<br>2-3, 5, 11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017138136 A
- JP 11154517 A
- JP 2012132083 A
- JP 2012149282 A